# EUROPÄISCHE PATENTSCHRIFT

(11) **EP 2 167 265 B1**
(45) Veröffentlichungstag und Bekanntmachung des Hinweises auf die Patenterteilung: **08.08.2012**
(21) Anmeldenummer: 08774257.3
(22) Anmeldetag: 24.06.2008
(51) Int. Cl.: B23D 31/00

(54) **BRUCHTRENNMODUL FÜR EINE WERKZEUGMASCHINE, WERKZEUGMASCHINE MIT EINEM BRUCHTRENNMODUL UND VERFAHREN ZUM BRUCHTRENNEN**
FRACTURE SEPARATION MODULE FOR A MACHINE TOOL, MACHINE TOOL WITH A FRACTURE SEPARATION MODULE, AND FRACTURE SEPARATION METHOD
MODULE DE SÉPARATION PAR RUPTURE POUR UNE MACHINE-OUTIL, MACHINE-OUTIL COMPRENANT UN TEL MODULE DE SÉPARATION PAR RUPTURE ET PROCÉDÉ DE SÉPARATION PAR RUPTURE

(30) Priorität: 27.06.2007 DE 102007029663
(43) Veröffentlichungstag der Anmeldung: 31.03.2010
(73) Patentinhaber: Alfing Kessler Sondermaschinen GmbH, 73433 Aalen (DE)
(72) Erfinder: MÜLLNER, Ralf, 73760 Ostfildern (DE); BRENDLE, Werner, 73494 Rosenberg (DE)
(74) Vertreter: HOFFMANN EITLE
(86) Internationale Anmeldenummer: PCT/EP2008/058023
(87) Internationale Veröffentlichungsnummer: WO 2009/000835

(56) Entgegenhaltungen:
- WO-A-01/70440
- WO-A-03/011505
- WO-A-2004/058446
- GB-A- 2 320 308
- GB-A- 191 019 540
- US-A- 2 836 881
- US-A- 4 837 915

## Beschreibung

### TECHNISCHES GEBIET

Die Erfindung betrifft ein Bruchtrennmodul für eine Werkzeugmaschine, eine Werkzeugmaschine mit einem Bruchtrennmodul und ferner ein Verfahren zum Bruchtrennen eines Werkstücks.

### STAND DER TECHNIK

Das Bruchtrennen von Werkstücken, auch Cracken genannt, findet beispielsweise bei der Herstellung von Pleueln oder Kurbelgehäusen für Verbrennungsmotoren Anwendung. In einem Arbeitsschritt werden dabei zunächst in der Innenumfangsfläche eines Lagerabschnitts zwei einander diametral gegenüberliegende Kerben ausgebildet, die eine Bruchebene vorgeben, entlang der das Werkstück in zwei Teile getrennt werden kann.

Das Bruchtrennen als solches erfolgt im Stand der Technik in einer speziellen Bruchtrennstation, in der ein Spreizelement, wie beispielsweise ein Spreizdorn oder ein paar Spreizbacken, in den zu trennenden Abschnitt eingebracht werden, so dass das Werkstück durch die aufgebrachten Spreizkräfte und die Spannungskonzentration in den Kerbscheiteln entlang der vorgegebenen Bruchebene getrennt wird.

Nach dem Bruchtrennvorgang (Cracken) und einigen Zwischenbearbeitungsschritten können die beiden Teile wieder zusammengefügt werden. Durch die beim Bruchtrennen entstehende unregelmäßige, vergleichsweise großflächige Bruchfläche wird ein definiertes Zusammenfügen des Werkstücks erleichtert, wobei die Verzahnungen der Bruchflächen ein seitliches Verschieben der Werkstückteile verhindern.

Das Bruchtrennen wird im Stand der Technik durch Sondermaschinen durchgeführt. Dabei muss das Werkstück von einer Vorrichtung, welche die Bruchebene vorgebende Kerben ausbildet, beispielsweise ein Räumwerkzeug oder ein Laser, zu der Bruchtrennvorrichtung hin befördert werden. Ein solches Verfahren wird beispielsweise in der WO 2004/058446 A1 offenbart. Hierbei wird eine Pleuelstange von einer Station zum Ausbilden von Öffnungen (Lagerabschnitten) und Kerben hin zu einer Station zum Bruchtrennen befördert.

Eine Einrichtung zum Bruchtrennen von Werkstücken mit einer Bruchtrennstation ist in der WO 03/011505 A2 offenbart. Hierbei sind Bruchtrennstation innerhalb eines als Ringtisch ausgebildeten Werkstücktisches und weitere Bearbeitungsstationen im Außenumfangsbereich des Ringtisches angeordnet.

Das Bruchtrennen im Stand der Technik durch maßgeschneiderte Sondermaschinen macht die Herstellung der Werkstücke, die den Arbeitsschritt des Bruchtrennens durchlaufen, unflexibel. Denn das Bruchtrennen ist an die zum Bruchtrennen vorgesehene Vorrichtung gebunden. Wirtschaftlich sinnvoll ist das Bruchtrennen somit bisher nur für Werkstücke, die in hohen Stückzahlen gefertigt werden. Für eine Durchführung des Bruchtrennens auf Fertigungsmitteln, die für niedrigere Stückzahlen geeignet sind, lagen die technologischen Voraussetzungen bisher nicht vor.

Die WO 01/70440 A1 offenbart ein Verfahren zum Bruchtrennen eines Pleuels, wobei der Pleuel vor dem Brechen auf einen hälftig geteilten Dorn aufgesteckt und das Lagerauge vorgespannt wird. Durch Eintreiben eines Keils zwischen die beiden Dornhälften wird die lagefixierte Lagerschale mit der zugeordnete Dornhälfte von der an der anderen Dornhälfte festgelegten Lagerschale durch im Wesentlichen gleichzeitiges Brechen beider Seiten getrennt.

### DARSTELLUNG DER ERFINDUNG

Es ist somit Aufgabe der vorliegenden Erfindung, ein Bruchtrennmodul für eine Werkzeugmaschine, eine Werkzeugmaschine mit einem Bruchtrennmodul und ein Verfahren zum Bruchtrennen zu entwickeln, um einen wirtschaftlichen Einsatz des Bruchtrennens auch für Stückzahlen zu ermöglichen, die flexible Fertigungsmittel erforderlich machen.

Die Aufgabe wird einerseits mit einer Vorrichtung gemäß den Ansprüchen 1 und 10 sowie einem Verfahren gemäß Anspruch 11 gelöst. Weitere vorteilhafte Ausführungsformen werden in den abhängigen Ansprüchen beschrieben.

Durch die Erfindung wird ein flexibel einsetzbares, standardisiertes Modul für das Bruchtrennen von Werkstücken bereitgestellt, nicht nur von Werkstücken für Verbrennungsmotoren, sondern auch für in Kleinserien produzierte Werkstücke, das in Verbindung mit Werkzeugmaschinen und insbesondere in Bearbeitungszentren mit standardisierten Schnittstellen verwendet werden kann. Auch mit dem erfindungsgemäßen Verfahren zum Bruchtrennen, welches bevorzugt das obige Modul verwendet, ist eine flexible Fertigung möglich. Durch die Möglichkeit zum Cracken in Werkzeugmaschinen, insbesondere Bearbeitungszentren, ist die wirtschaftliche Fertigung auch in kleineren Serien ermöglicht.

Hierzu umfasst das Bruchtrennmodul der vorliegenden Erfindung für eine Werkzeugmaschine eine Antriebsachse mit Aufnahmeabschnitt zum Einsetzen des Moduls in eine Spindel einer Werkzeugmaschine, ein Brechteil zum Bruchtrennen eines Werkstücks und eine Umwandlungseinheit, die sowohl mit der Antriebsachse als auch mit dem Brechteil verbunden ist und eine Drehbewegung der Antriebsachse in eine zum Brechen des Werkstücks geeignete lineare Bewegung des Brechteils umwandelt.

Erfindungsgemäß wird der Aufnahmeabschnitt des Moduls der vorliegenden Erfindung in eine Werkzeugmaschine, beispielsweise ein Bearbeitungszentrum, über eine Spindel, die Bestandteil der Werkzeugmaschine ist und eine Schnittstelle darstellt, eingesetzt. Die Drehbewegung der Spindel wird an die Antriebsachse weitergeleitet und kann hierbei über eine Umwandlungseinheit direkt in eine lineare, zum Bruchtrennen mittels des Brechteils geeignete, Bewegung umgewandelt werden. Vorzugsweise wird hierbei die Drehbewegung der Antriebsachse unter Abstützung des Brechteils, bevorzugt an einem feststehenden Spindelflansch, zeitgleich, d.h. ohne eventuelle Verzögerung, die durch eine Speicherung der durch die Spindel aufgebrachten Energie auftreten kann, in eine lineare Bewegung des Brechteils umgewandelt. In diesem Fall kann das Bruchtrennmodul einerseits einen einfachen Aufbau aufweisen, auf der anderen Seite kann eine Kraftübersetzung erwünscht sein, um die notwendige Vorschubkraft, die zum Bruchtrennen des Werkstücks benötigt wird, zu erzielen. Bei einer direkten Umsetzung der Drehbewegung in eine lineare Bewegung baut sich eine Spannung in dem Werkstück, beispielsweise in dem zu brechenden Lagerabschnitt eines Pleuels, langsam auf. Über die Regelung der Drehgeschwindigkeit ist es vorteilhafterweise möglich, die lineare Bewegung nicht gleichförmig zu gestalten und somit den Kraftverlauf unabhängig von der Geometrie des Brechteils zu steuern, oder auch, sie an unterschiedliche Geometrien des Brechteils anzupassen.

Sollte eine solche andauernde Belastung nicht erwünscht sein, kann die Umwandlungseinheit so ausgebildet sein, dass zunächst eine vorbestimmte Energie der sich drehenden Antriebsachse gespeichert wird, die zu einem späteren Zeitpunkt augenblicklich in eine Bewegung des Brechteils umgewandelt wird.

Alternativ zu der bisher geschilderten Umwandlung der Drehbewegung der Antriebsachse in eine lineare Bewegung des Brechteils ist es im Rahmen der vorliegenden Erfindung auch möglich, die Drehbewegung in eine Spreizbewegung oder eine andere Bewegung, die zum Bruchtrennen geeignet ist, umzuwandeln. Beispielsweise kann die Ausführungsform des Bruchtrennens von den geometrischen Eigenschaften des zu brechenden Werkstücks abhängen.

Ein Bruchtrennmodul der obigen Ausführung ist sowohl kostengünstig herstellbar als auch vielseitig und flexibel einsetzbar. Eine stationäre Bindung des Crackvorgangs an eine Sondermaschine ist somit nicht mehr notwendig, was insbesondere auch eine kostengünstige und effiziente Herstellung von Pleueln und anderen Werkstücken, bei denen ein Brechvorgang erforderlich ist, erlaubt.

Vorzugsweise umfasst das Bruchtrennmodul ein Gehäuse, wobei die Antriebsachse gegenüber dem Gehäuse drehbar ist. Ferner umfasst die Umwandlungseinheit vorzugsweise eine Drehmomentstütze, die das Gehäuse gegen die Drehung der Antriebsachse abstützt. Zum einen erleichtert ein geeignetes Gehäuse das Transportieren, Einsetzen und Demontieren des Moduls, zum anderen kann das Gehäuse, zusammen mit einer Drehmomentstütze, dem funktionalen Aspekt der Umsetzung der Drehbewegung in eine lineare Bewegung dienen.

Vorzugsweise enthält die Umwandlungseinheit eine Antriebseinheit zum Aufnehmen und Speichern von Energie, die von der Werkzeugmaschine über die Spindel bereitgestellt wird, und eine Riegelvorrichtung zum Freigeben der gespeicherten Energie. Es kann erwünscht sein, dass der Brechbereich des Bruchtrennmoduls variabel einstellbar ist. Während beim Brechen von Pkw-Pleueln etwa 12 bis 17 kN erforderlich sind, sind beim Brechen von Pleueln für Lkws ca. 52 bis 95 kN erforderlich. Die Umwandlungseinheit der vorliegenden Erfindung kann durch eine geeignete Kraftübersetzung oder Speicherung einen solchen variablen Brechbereich bereitstellen.

Dazu umfasst in einer bevorzugten Ausführungsform die Antriebseinheit ferner einen Kolben, der in axialer Richtung der Antriebsachse verschiebbar ist und mit dem Brechteil gekoppelt ist, eine oder mehrere Federn, gegen die der Kolben gespannt werden kann, indem er entlang der axialen Richtung der Antriebsachse verschoben wird und eine Mutter, die auf der Antriebsachse reitet, wobei während des Spannens wenigstens ein Teil der Mutter mit wenigstens einem Teil des Kolbens so verbunden ist, dass die sich entlang der Antriebsachse bewegende Mutter den Kolben gegen die Feder/Federn spannt. Es können hierbei mehrere Federn symmetrisch um die Antriebsachse angeordnet sein. Eine Feder, die typischer Weise in der vorliegenden Erfindung Verwendung findet, weist einen Arbeitsweg von zwischen etwa 30 und etwa 40 mm, bevorzugt von etwa 35 mm, eine Nennkraft von zwischen etwa 7000 und etwa 7500 N, bevorzugt von etwa 7250 N, und eine Länge von zwischen etwa 125 und etwa 130 mm, bevorzugt von etwa 127 mm auf. Vorzugsweise sind mehrere Federn in Radial- und Umfangsrichtung um die Antriebsachse angeordnet. Wenn 6 Federn dieser Art symmetrisch in Radial- und Umfangsrichtung um die Antriebsachse angeordnet sind, kann eine Gesamtnennkraft von ca. 43,5 kN erzeugt werden. Je nach Anwendungsbereich und in Abhängigkeit der benötigten Vorschubkräfte können sowohl die Parameter der Federn als auch deren Anzahl wie gewünscht angepasst werden.

Vorzugsweise sind die Federn entweder Fluiddruckfedern, mechanische oder magnetische Federn. Mechanische Federn sind kostengünstige und in vielen verschiedenen Ausführungen erhältliche Standardbauteile und damit besonders geeignet, um in dem vorliegenden Modul verwendet zu werden. Es kann jedoch wünschenswert sein, Energiespeicher zu verwenden, die andere Charakteristiken, beispielsweise eine andere Kraft-Weg Kennlinie aufweisen. So kann bei Magnetfedern der Kraftverlauf über den gesamten Arbeitshub konstant sein. Durch die Auswahl der Art der Energiespeicher kann auf die Kraftsteuerung, sowohl des Spannvorgangs als auch der Energiefreisetzung, gezielt Einfluss genommen werden.

Vorzugsweise ist die Riegelvorrichtung so ausgebildet, dass sie über ein äußeres Signal, beispielsweise ein hydraulisches, elektromagnetisches oder mechanisches Signal, den gespannten Kolben freigibt. Nachdem der Kolben gespannt wurde, hält die Auslöseinheit den Kolben in der gespannten Position, beispielsweise indem Stifte mit dafür vorgesehenen Aussparungen in dem Kolben eingreifen. Als Antwort auf ein äußeres Signal löst die Riegelvorrichtung die Verankerung, wodurch die in den Federn gespeicherte potentielle Energie in kinetische Energie des Kolbens umgewandelt wird. Es ist hierbei nicht erforderlich, dass die Verankerung auf eine mechanische Art und Weise wirkt. Als weitere Möglichkeit sei hier eine elektromagnetisch wirkende Riegelvorrichtung genannt, die den Kolben unter Ausnutzung elektromagnetischer Kräfte in der gespannten Position hält.

Vorzugsweise ist das Bruchtrennmodul so ausgebildet, dass es in einem Bearbeitungszentrum über eine Standardschnittstelle in eine Werkzeugmaschine eingesetzt wird. Besonders bevorzugt sind Standardschnittstellen wie HSK Aufnahmen nach DIN 69 893 oder Steilkegel nach DIN 69 871. Die Verwendung des Bruchtrennmoduls in einem Bearbeitungszentrum ist kostengünstig, da keine Sondermaschine entwickelt und verwendet werden muss. Insbesondere wird durch die Verwendung eines Bruchtrennmoduls der vorliegenden Erfindung eine stationäre Bindung an Sondermaschinen vermieden. Bearbeitungszentren stellen standardisierte Schnittstellen bereit und sind somit hinsichtlich einer Modularisierung des Bruchtrennens besonders geeignet.

Vorzugsweise ist das Brechteil keilförmig ausgebildet. Ein solches Bauteil ist einfach und kostengünstig herstellbar. Neben dem kraftvollen, linearen Einbringen des Brechteils in beispielsweise einen stationären Lagerabschnitt, bzw. in einen in den Lagerabschnitt eingebrachten Brechdorn, sind ferner für das Bruchtrennen keine zusätzlichen Mechanismen erforderlich.

Die Aufgabe der vorliegenden Erfindung wird ferner durch ein Verfahren zum Bruchtrennen eines Werkstücks gelöst, indem der Schritt der Bruchtrennung mittels des Bruchtrennmoduls der vorliegenden Erfindung erfolgt.

Vorzugweise wird dabei der Crackvorgang über eine CNC-Steuerung gesteuert und überwacht. Es ist hierbei eine stufenlose, gezielte Kraftsteuerung möglich, womit eine komfortable Optimierung des Brechverhaltens durchführbar ist. Der Kraftverlauf des Brechvorgangs ist problemlos steuerbar. Es kann beispielsweise, im Falle einer wie oben beschriebenen zeitgleichen Kraftübertragung, eine Kraft zunächst langsam aufgebracht werden, um den Brechdorn anzulegen und anschließend die Kraft schlagartig erhöht werden, um das Bruchtrennen durchzuführen. Insbesondere kann in Verbindung mit einem Werkzeugüberwachungssystem oder direkt über die CNC-Steuerung die Stromaufnahme des Brechvorgangs überwacht werden. Ein zusätzlicher Kraftsensor ist dann nicht erforderlich.

Vorzugsweise umfasst das Verfahren zum Bruchtrennen eines Werkstücks ferner Spannen des Werkstücks, Ritzen der Oberfläche des bzw. der bruchzutrennenden Bereichs bzw. Bereiche, bereichsweises Bruchtrennen des Werkstücks, und Lösen und/oder Umspannen des Werkstücks. Ferner erfolgen die Schritte des Ritzens und Bruchtrennens vorzugsweise in einer Aufspannung. Das Werkstück muss nach dem Ausbilden der Kerben nicht mehr von beispielsweise einer Lasereinrichtung hin zu einer Bruchtrennstation befördert werden. Dies vereinfacht den Arbeitsablauf spürbar, verringert die Anschaffungskosten der Vorrichtung, da statt zwei separater Stationen - der Laserstation und der Bruchtrennstation - nur eine einzige Bearbeitungsstation vorgesehen werden muss, und erhöht die Genauigkeit der Bearbeitung.

Vorzugsweise umfasst das Verfahren zum Bruchtrennen eines Werkstücks das feste Spannen an einer Seite und bewegliche Spannen an einer anderen Seite. Dies gewährleistet, dass das beim Cracken abgesprengte Teil sich während der Bruchtrennung begrenzt und kontrolliert bewegen kann. Vorzugsweise umfasst das Verfahren zum Bruchtrennen eines Werkstücks weiterhin Anpressen der bruchgetrennten Bereiche aneinander, bevorzugt nach Reinigen der bruchgetrennten Oberflächen und/oder mittels der beweglichen Spanneinrichtung. Vorzugsweise umfasst das Verfahren zum Bruchtrennen eines Werkstücks ferner einen Schlichtschritt (Honen o. ä.) des bruchgetrennten Bauteils, bevorzugt in derselben Aufspannung.

### KURZE BESCHREIBUNG DER ZEICHNUNGEN

In den beigefügten Zeichnungen zeigen
Fig. 1 eine Seitenansicht eines Bruchtrennmoduls einer ersten Ausführungsform der vorliegenden Erfindung;
Fig. 2 eine Schnittansicht eines Bruchtrennmoduls von Fig. 1, in der die Komponenten der Umwandlungseinheit freigelegt sind;
Fig. 3 eine Schnittansicht eines Teils der Umwandlungseinheit;
Fig. 4 eine schematische Ansicht eines Bearbeitungszentrums, welches das Bruchtrennmodul der vorliegenden Erfindung verwendet;
Fig. 5a-5c Schnittansichten des Bruchtrennmoduls aus Fig. 1 in verschiedenen Betriebszuständen;
Fig. 6 eine Seitenansicht eines Bruchtrennmoduls entsprechend einer zweiten Ausführungsform der vorliegenden Erfindung;

### BEVORZUGTE AUSFÜHRUNGSFORMEN DER ERFINDUNG

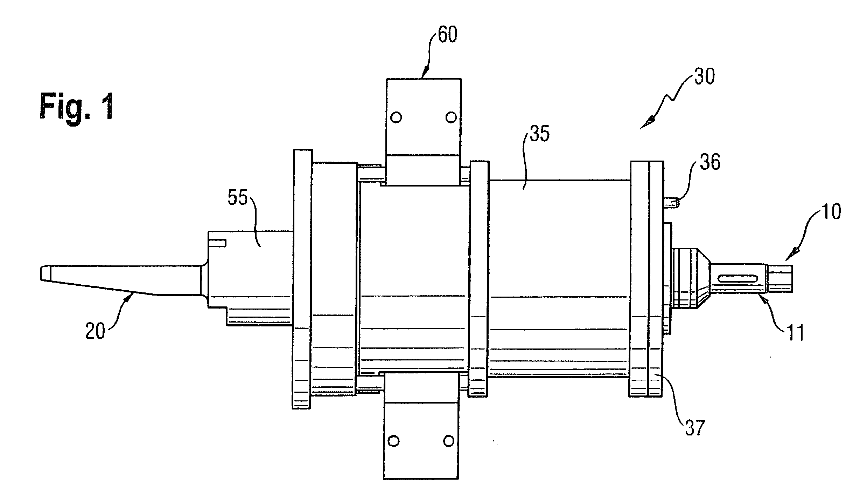

Fig. 1 ist eine Seitenansicht eines Bruchtrennmoduls. Das Bezugszeichen 10 bezeichnet eine aus einer Grundfläche des Gehäuses 35 der Umwandlungseinheit 30 heraustretende Antriebsachse, deren in Fig. 1 sichtbare Teil einen Aufnahmeabschnitt 11 ausbildet, über den das Modul in eine Werkzeugmaschine eingespannt wird. An der gegenüberliegenden Seite der Umwandlungseinheit 30 ist ein Brechteil 20 angeordnet, das zum Bruchtrennen eines Lagerabschnitts eines Pleuels verwendet wird. Das Brechteil 20 ist keilförmig ausgebildet und mit dem vorderen Ende eines Kolbenaufsatzes 55 verbunden, der weiter unten näher beschrieben wird. Ferner zeigt Fig. 1 einen Teil der Riegelvorrichtung 60 und einen Teil einer Drehmomentstütze 36, deren Aufbau und Funktionen ebenfalls weiter unten näher beschrieben werden.

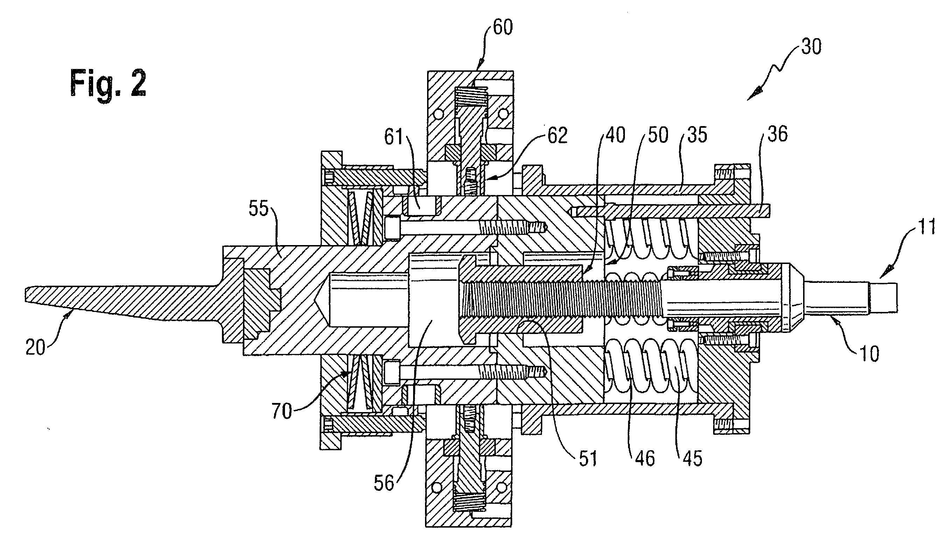

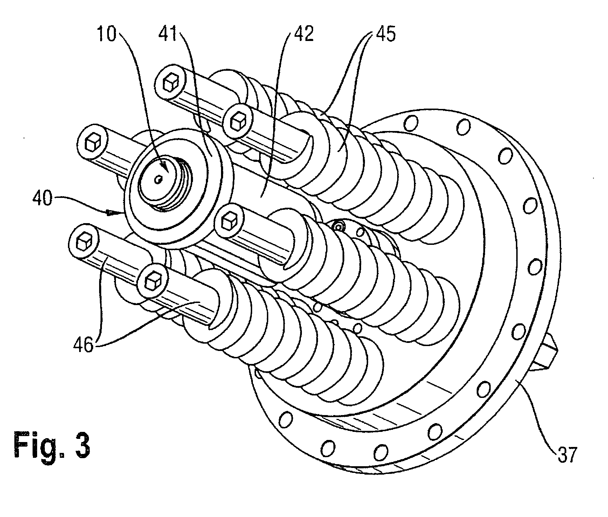

Fig. 2 zeigt eine Schnittansicht des Bruchtrennmoduls, und Fig. 3 ist eine perspektivische Ansicht des antriebsachsenseitigen Bereichs der Umwandlungseinheit 30.

Wie aus Fig. 3 hervorgeht, ist ein Gehäusedeckel 37 vorgesehen, der das zylindrische Gehäuse 35 der Umwandlungseinheit 30 antriebsachsenseitig verschließt. An dem Gehäusedeckel 37 sind Führungsbolzen 46 angebracht, über die Druckfedern 45 gezogen sind. Wie noch näher zu erläutern ist, wird ein Kolben 50 über diese Druckfedern 45 gespannt. Die Führungsbolzen 46, zusammen mit den Druckfedern 45, sind parallel zu und symmetrisch um die Antriebsachse 10 angeordnet.

Es ist selbstverständlich möglich, nur eine Feder zu verwenden, die dann bevorzugt zentral angeordnet ist.

Auch können, obwohl in der Ausführungsform Spiralfedern aus Stahl über Führungsbolzen 46 gezogen werden, andere Energiespeicher verwendet werden. Beispielsweise werden in den letzten Jahren verstärkt Faserverbundwerkstoffe, wie spezielle glasfaserverstärkte Kunststoffe im Federbau eingesetzt. Ferner können neben mechanischen Federn Fluiddruckfedern oder magnetische Federn verwendet werden. Durch die Auswahl der Art der Energiespeicher kann auf die Kraftsteuerung, sowohl des Spannvorgangs als auch der Energiefreisetzung, gezielt Einfluss genommen werden.

Auf der Antriebsachse 10 ist ein Gewinde an dem Ende, das dem Aufnahmebereich der Antriebsachsachse gegenüberliegt, aufgebracht. Auf dem Gewinde reitet eine Mutter 40. Die Mutter 40 weist eine zylindrische Gestalt und ferner neben einem Schaft 42 brechteilseitig einen hervorstehenden, ebenfalls zylindrischen Abschnitt 41 auf.

In dem Gehäuse 35 ist ein Kolben 50 vorgesehen, vgl. Fig. 2, der in axialer Richtung verschiebbar ist. Neben Öffnungen zur Aufnahme der Führungsbolzen 46 weist der Kolben 50 eine weitere durchgehende Öffnung 51 auf, die entlang der axialen Symmetrieachse des Kolbens 50 vorgesehen und so dimensioniert ist, dass sie den Schaft 42 der Mutter 40 aufnehmen kann, so dass Mutter 40 und Kolben 50 parallel gegeneinander verschiebbar sind. Der Durchmesser des hervorstehenden Abschnitts 41 ist größer als der Durchmesser der Öffnung 51. Infolgedessen wird die Verschiebbarkeit zwischen Mutter 40 und Kolben 50 einseitig begrenzt. Ferner weist der Kolben 50 eine Öffnung zur Aufnahme einer Drehmomentstütze 36 auf. Die Drehmomentstütze ist über den Gehäusedeckel 37 mit dem Gehäuse 35 verbunden und steht gegenüber dem Gehäuse 35 nach außen hervor.

Ein Kolbenaufsatz 55, an dessen einem Ende das Brechteil 20 angebracht ist, ist mit dem Kolben 50 auf der anderen Seite fest verbunden. Der Kolbenaufsatz 55 enthält antriebsachsenseitig eine Aussparung 56. Diese Aussparung 56 ist zweiteilig vorgesehen, wobei der vordere Aussparungsabschnitt (brechteilseitig) einen gegenüber dem hinteren Aussparungsabschnitt (antriebsachsenseitig) geringeren Durchmesser aufweist. Der vordere Aussparungsabschnitt ist so dimensioniert, dass er einen Teil der Antriebsachse 10 aufnehmen kann. Der hintere Aussparungsabschnitt ist so vorgesehen, dass er den hervorstehenden Abschnitt 51 der Mutter 40 und einen Teil des Schafts 42 der Mutter 40 aufnehmen kann.

An dem Umfang des Gehäuses 35 ist eine Riegelvorrichtung 60 vorgesehen, die den Kolben 50 in einem gespannten Zustand verriegelt und durch ein äußeres Signal die Verriegelung freigibt, so dass die in den Druckfedern 45 gespeicherte potentielle Energie schlagartig freigegeben und auf den Kolben 50 und damit über den Kolbenaufsatz auf das Brechteil 20 übertragen werden kann. In der vorliegenden Ausführungsform umfasst die Riegelvorrichtung 60 Aussparungen 61 oder eine Nut 61, die in die Umfangsfläche des Kolbenaufsatzes eingebracht ist. In einem verriegelten Zustand befinden sich Stifte 62 mit der Nut 61 im Eingriff. Dieser Eingriff wird als Antwort auf ein äußeres Signal gelöst.

Schließlich kann das Gehäuse 35 brechteilseitig eine Dämpfung 70 enthalten, vgl. Fig. 3, die den Schlag des Kolbens 50 über den Aufsatz abbremst, um das Gehäuse 35 nicht zu beschädigen.

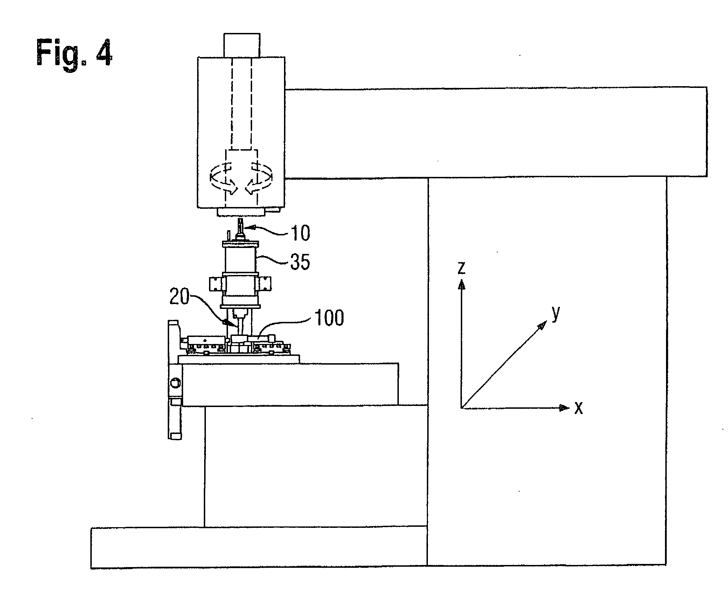

Im Folgenden werden der Betrieb und die Anwendung des Bruchtrennmoduls in einem Bearbeitungszentrum (BAZ) beschrieben. Dazu wird, wie in Fig. 4 gezeigt ist, das Bruchtrennmodul über die Antriebsachse 10 in das Bearbeitungszentrum eingespannt, wobei die Drehmomentstütze in eine dafür vorgesehene Öffnung in dem BAZ eingebracht wird. Die Verwendung in anderen Werkzeugmaschinen, z.B. Mehrachsfräsen, ist selbstverständlich möglich.

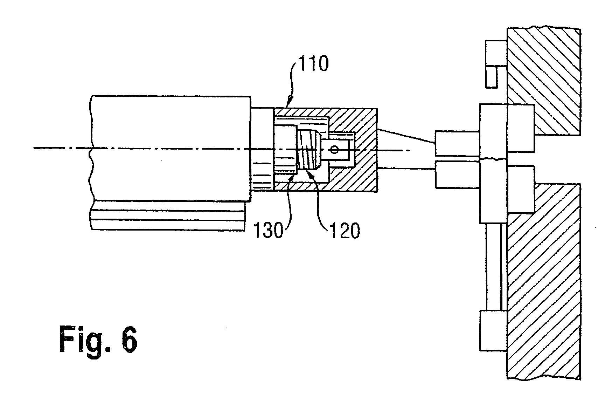

Als Nächstes wird ein Pleuel 100 mittels einer Standardvorrichtung auf den Tisch des BAZ so eingespannt, dass die Verlängerung des Brechteils 20 in Z-Richtung (axiale Richtung) die Querschnittsfläche des Lagerabschnitts des Pleuels schneidet. Um ein definiertes Bruchergebnis zu erzielen und um den Lagerabschnitt nicht über den gewollten Bruch hinaus zu beschädigen, kann ein Brechdorn in den Lagerabschnitt eingebracht werden, vgl. Fig. 6. Hierbei wird bevorzugt eine Spanneinrichtung eingesetzt, von der ein Teil den Schaft und das Kolbenbolzenauge fest hält, auch vor der ein weiterer Teil den abzutrennenden Lagerdeckel beweglich hält und diesen auch dem Bruchtrennen und ggf. Rütteln wieder anpresst, wie sie im Stand der Technik bekannt ist.

Der Pleuel ist bereits auf herkömmliche Art und Weise durch beispielsweise zwei einander diametral gegenüberliegende Kerben 18 für das Bruchtrennen vorbereitet.

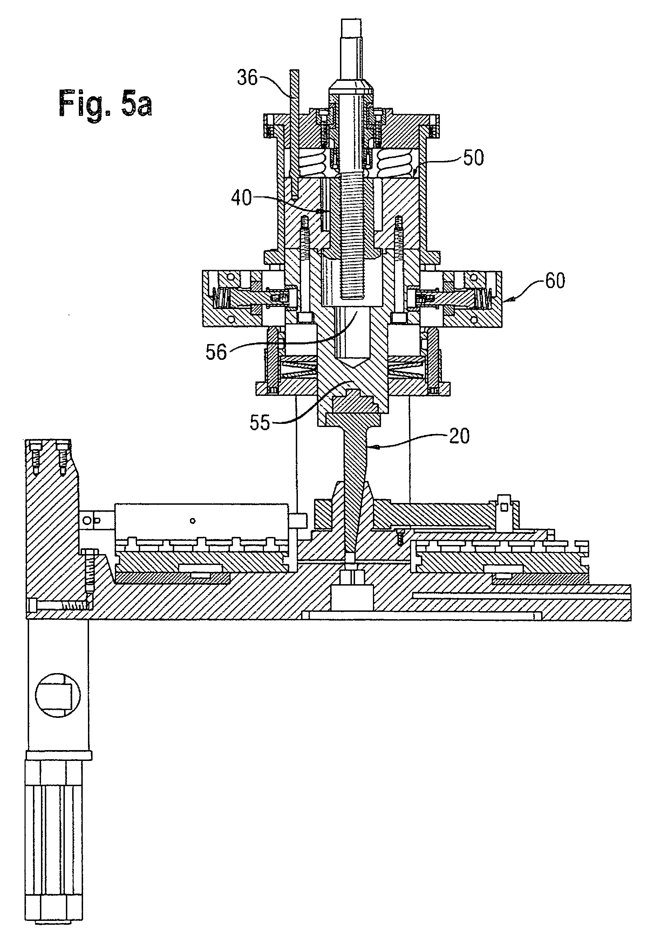

Fig. 5a bis 5c zeigen verschiedene Zustände, die das Bruchtrennmodul während der Verwendung annehmen kann. Fig. 5a zeigt dabei den gespannten Kolben 50. Hierbei kommt der hervorstehende Abschnitt 41 der Mutter 40 mit der brechteilseitigen Oberfläche des Kolbens 50 in Kontakt. Die Drehung der Antriebsachse 10 wird über das Gewinde der Antriebsachse 10 in eine lineare Bewegung der Mutter 40, in axialer Richtung, umgewandelt. Diese bewegt sich zusammen mit dem Kolben 50, dem Kolbenaufsatz 55 und dem Brechteil 20 in Z-Richtung nach oben, wobei dabei eine Kraft gegen die Federn 45 aufgewendet werden muss. Ein Teil der aufgebrachten Energie wird dabei als potentielle Energie in den Federn 45 gespeichert.

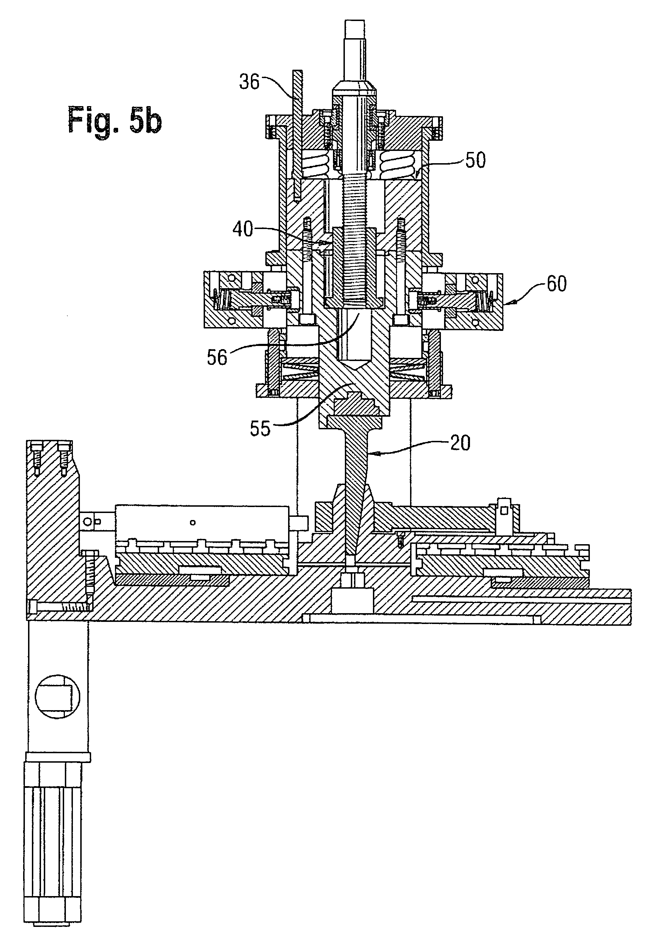

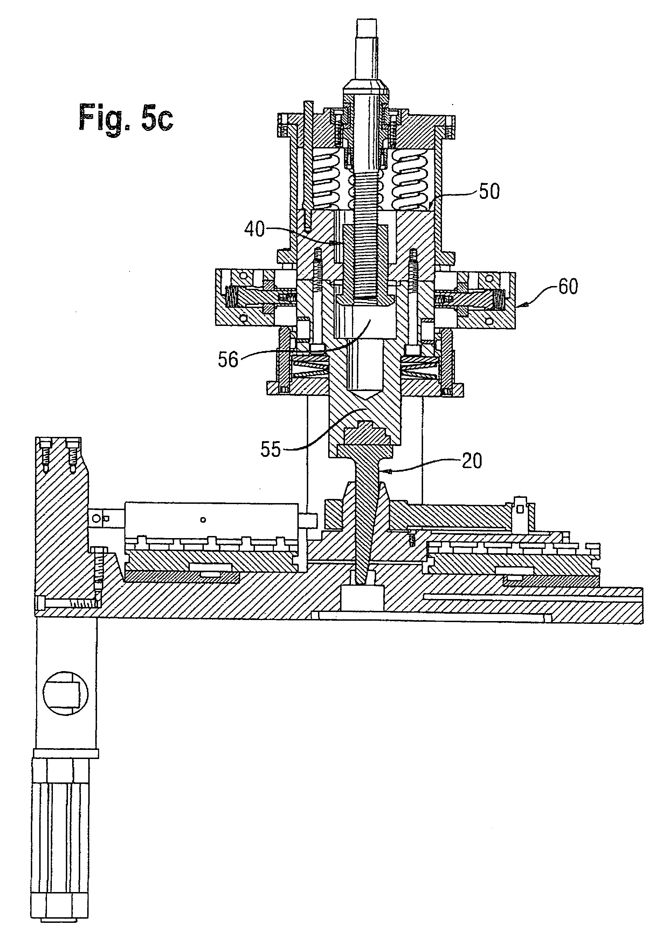

In einem gespannten Zustand wird der Kolbenaufsatz 55 mittels der Riegelvorrichtung 60 verriegelt und der Drehsinn der Antriebsachse 10 umgekehrt, so dass die Mutter 40, wie in Fig. 5b gezeigt ist, zurückgesetzt wird, wobei sie durch den vorderen Aussparungsabschnitt des Kolbenaufsatzes 55 aufgenommen wird. Dabei hält die Riegelvorrichtung 60 den Kolbenaufsatz 55 und damit den Kolben 50 und das Brechteil 20 in einem gespannten Zustand. Auf ein äußeres Signal hin, beispielsweise ein hydraulisches oder elektromagnetisches Signal, wird die Verriegelung gelöst, so dass die in den Federn 45 gespeicherte potentielle Energie in eine lineare Bewegung des Kolbens 50, des Kolbenaufsatzes 55 und des Brechteils 20 umgewandelt wird. Die Energiefreisetzung geschieht schlagartig, so dass das Brechteil 20 in den Lagerabschnitt derart gestoßen wird, dass der Lagerabschnitt entlang der vorgegebenen Bruchebene getrennt wird. Dieser Arbeitszustand des Moduls ist in Fig. 5c gezeigt. Durch ein erneutes Spannen der Federn 45 kann der obige Vorgang wiederholt werden.

In der vorliegenden Ausführungsform wird eine mechanische Riegelvorrichtung verwendet. Um eine mechanische Beanspruchung und damit den Verschleiß der an der Verriegelung beteiligten Abschnitte zu verringern, kann als weitere Möglichkeit eine elektromagnetisch wirkende Riegelvorrichtung zum Einsatz kommen. Dazu können beispielsweise Elektromagneten in oder an dem Gehäuse 35 und am Kolben 50 vorgesehen sein. In einem gespannten Zustand werden diese Magneten eingeschaltet, so dass der Kolben durch eine anziehende oder abstoßende magnetische Kraft in seiner gespannten Position gehalten wird. Durch Abschalten der Magnetfelder wird die Verriegelung gelöst, so dass die in den Federn 45 gespeicherte potentielle Energie in eine lineare Bewegung des Kolbens 50, des Kolbenaufsatzes 55 und des Brechteils 20 umgewandelt wird.

Fig. 6 illustriert eine weitere Ausführungsform der vorliegenden Erfindung. In dieser Ausführungsform findet der Vorschub des Brechteils 20 nicht durch das plötzliche Freigeben gespannter Federn 45 statt, sondern es wird über eine Abstützung 110 des Brechteils 20, die Teil der Umwandlungseinheit 30 ist, am feststehenden Antriebsachsenflansch des BAZ, die zum Brechen benötigte Kraft zeitgleich über eine Maschinenachse aufgebracht.

In der vorliegenden Ausführungsform ist das Brechteil 20 mit einer Gewindeachse 120 verbunden und in der Brechteilabstützung 110 verschiebbar angeordnet. Die Gewindeachse 120 steht mit einem Aufnahmeabschnitt 130, der als Schnittstelle mit der Spindel des BAZ dient, in einer Schraubverbindung. Die Drehbewegung der Antriebsachse 10 wird dabei in eine lineare Bewegung des Brechteils 20 umgewandelt, wobei der Vortrieb des Brechteils 20 genutzt wird, um über einen Brechdorn, den Lagerabschnitt des Pleuels an den vorbereiteten Stellen zu brechen.

## Patentansprüche

1. Bruchtrennmodul für eine Werkzeugmaschinel **dadurch gekennzeichnet, dass** das Bruchtrennmodul :
(a) eine Antriebsachse (10) mit Aufnahmeabschnitt zum Einsetzen des Moduls in eine Spindel einer Werkzeugmaschine;
(b) ein bevorzugt keilförmig ausgebildetes Brechteil (20) zum Bruchtrennen eines Werkstücks;
(c) eine Umwandlungseinheit (30), die sowohl mit der Antriebsachse (10) als auch mit dem Brechteil (20) verbunden ist und eine Drehbewegung der Antriebsachse (10) in eine zum Brechen des Werkstücks geeignete lineare Bewegung des Brechteils (20) umwandelt, umfasst.

2. Bruchtrennmodul nach Anspruch 1, **dadurch gekennzeichnet, dass** das Bruchtrennmodul ferner ein Gehäuse (35) umfasst, wobei die Antriebsachse (10) bezüglich des Gehäuses (35) drehbar ist, und bevorzugt die Umwandlungseinheit (30) eine Drehmomentstütze (36) enthält, die das Gehäuse (35) gegen die Drehung der Antriebsachse (10) abstützt.

3. Bruchtrennmoduls nach einem der vorhergehenden Ansprüche, **dadurch gekennzeichnet, dass** die Drehbewegung der Antriebsachse (10) unter Abstützung des Brechteils (20) zeitgleich in eine lineare Bewegung des Brechteils (20) umgewandelt wird.

4. Bruchtrennmodul nach einem der Ansprüche 1 oder 2, **dadurch gekennzeichnet, dass** die Umwandlungseinheit (30) eine Antriebseinheit zum Aufnehmen und Speichern der durch die Werkzeugmaschine über die Spindel bereitgestellten Energie, und eine Riegelvorrichtung (60) zum Freigeben der gespeicherten Energie, umfasst.

5. Bruchtrennmodul nach Anspruch 4, **dadurch gekennzeichnet, dass** die Antriebseinheit ferner umfasst:
(c1) einen Kolben (50), der in axialer Richtung der Antriebsachse (10) verschiebbar ist und mit dem Brechteil (20) gekoppelt ist;
(c2) eine oder mehrere Federn (45), gegen die der Kolben (50) gespannt werden kann, indem er entlang der axialen Richtung der Antriebsachse (10) verschoben wird; und
(c3) eine Mutter (40), die auf der Antriebsachse (10) reitet, wobei während des Spannens wenigstens ein Teil der Mutter (40) mit wenigstens einem Teil des Kolbens (50) so verbunden ist, dass die sich entlang der Antriebsachse (10) bewegende Mutter (40) den Kolben (50) gegen die eine oder mehreren Federn (45) spannt.

6. Bruchtrennmodul nach Anspruch 5, **dadurch gekennzeichnet, dass** die Riegelvorrichtung (60) den gespannten Kolben (50) frei gibt, womit die in den Federn (45) gespeicherte potenzielle Energie in kinetische Energie des Kolbens (50) umgewandelt wird, und bevorzugt die Riegelvorrichtung (60) durch ein äußeres hydraulisches, elektromagnetisches oder mechanisches Signal gesteuert wird.

7. Bruchtrennmodul nach einem der Ansprüche 5 oder 6, **dadurch gekennzeichnet, dass** mehrere Federn (45) in Radial- und in Umfangsrichtung symmetrisch um die Antriebsachse (10) angeordnet sind, wobei die Federn (45) bevorzugt eine Nennkraft von etwa 7250 N, eine Länge von etwa 127 mm und einen Arbeitsweg von etwa 35 mm aufweisen.

8. Bruchtrennmodul nach einem der Ansprüche 5 bis 7, **dadurch gekennzeichnet, dass** die Feder (45) oder die Federn (45) entweder Fluiddruckfedern, mechanische oder magnetische Federn ist oder sind.

9. Bruchtrennmodul nach einem der vorhergehenden Ansprüche, **dadurch gekennzeichnet, dass** es über eine Standardschnittstelle in eine Werkzeugmaschine einzusetzen ist, wobei die Standardschnittstelle bevorzugt eine HSK Aufnahme nach DIN 69 893 oder ein Steilkegel nach DIN 69 871 ist.

10. Werkzeugmaschine mit einem Bruchtrennmodul nach einem der vorhergehenden Ansprüche.

11. Verfahren zum Bruchtrennen eines Werkstücks, **dadurch gekennzeichnet, dass** der Schritt des Bruchtrennens mittels des Crackmoduls nach einem der Ansprüche 1 bis 9 erfolgt.

12. Verfahren zum Bruchtrennen eines Werkstücks nach Anspruch 11, ferner umfassend folgende Schritte:
Spannen des Werkstücks;
Ritzen der Oberfläche des oder der bruchzutrennenden Bereichs oder Bereiche;
bereichsweises Bruchtrennen des Werkstücks; und
Lösen und/oder Umspannen des Werkstücks.

13. Verfahren nach Anspruch 12, **dadurch gekennzeichnet, dass** Schritte des Ritzens und Bruchtrennens in einer Aufspannung erfolgen.

14. Verfahren zum Bruchtrennen eines Werkstücks nach einem der Ansprüche 11 bis 13, **dadurch gekennzeichnet, dass** der Schritt des Bruchtrennens das feste Spannen an einer Seite und bewegliche Spannen an einer anderen Seite des Werkstücks umfasst.

15. Verfahren zum Bruchtrennen eines Werkstücks nach einem der Ansprüche 11 bis 14 weiterhin umfassend das Anpressen der bruchgetrennten Bereiche aneinander, bevorzugt nach Reinigen der bruchgetrennten Oberflächen, und weiter bevorzugt weiterhin umfassend die Oberflächenfeinbearbeitung des bruchgetrennten Bauteils, bevorzugt in derselben Aufspannung.

## Claims

1. Fracture separation module for a machine tool, **characterised in that** the fracture separation module comprises:
(a) a drive shaft (10) with receiving section for insertion of the module in a spindle of a machine tool;
(b) a preferably wedge-shaped fracturing part (20) for fracture separating a workpiece;
(c) a conversion unit (30) which is connected both to the drive shaft (10) and to the fracturing part (20) and converts a rotational movement of the drive shaft (10) to a linear movement of the fracturing part (20) suitable for fracturing the workpiece.

2. Fracture separation module according to claim 1, **characterised in that** the fracture separation module further comprises a housing (35), wherein the drive shaft (10) is rotatable relative to the housing (35), and preferably the conversion unit (30) contains a torque support (36) which supports the housing (35) against rotation of the drive shaft (10).

3. Fracture separation module according to any of the preceding claims, **characterised in that** the rotational movement of the drive shaft (10) while supporting the fracturing part (20) is simultaneously converted to a linear movement of the fracturing part (20).

4. Fracture separation module according to either of claims 1 or 2, **characterised in that** the conversion unit (30) comprises a drive unit for receiving and storing the energy provided by the machine tool via the spindle, and a locking device (60) for release of the stored energy.

5. Fracture separation module according to claim 4, **characterised in that** the drive unit further comprises:
(c1) a piston (50) which is displaceable in the axial direction of the drive shaft (10) and coupled to the fracturing part (20);
(c2) one or more springs (45) against which the piston (50) can be tensioned by displacing it along the axial direction of the drive shaft (10); and
(c3) a nut (40) which rides on the drive shaft (10), wherein during tensioning at least a portion of the nut (40) is connected to at least a portion of the piston (50) in such a way that the nut (40) moving along the drive shaft (10) tensions the piston (50) against the one or more springs (45).

6. Fracture separation module according to claim 5, **characterised in that** the locking device (60) releases the tensioned piston (50), whereby the potential energy stored in the springs (45) is converted to kinetic energy of the piston (50), and preferably the locking device (60) is controlled by an external hydraulic, electromagnetic or mechanical signal.

7. Fracture separation module according to either of claims 5 or 6, **characterised in that** a plurality of springs (45) are arranged symmetrically round the drive shaft (10) in the radial and circumferential directions, wherein the springs (45) preferably have a nominal force of approximately 7250 N, a length of approximately 127 mm and a working distance of approximately 35 mm.

8. Fracture separation module according to any of claims 5 to 7, **characterised in that** the spring (45) or springs (45) is or are either fluid pressure springs or mechanical or magnetic springs.

9. Fracture separation module according to any of the preceding claims, **characterised in that** it is to be inserted in a machine tool via a standard interface, wherein the standard interface is preferably an HSK receptacle according to DIN 69 893 or a quick-release taper according to DIN 69 871.

10. Machine tool having a fracture separation module according to any of the preceding claims.

11. Method for fracture separation of a workpiece, **characterised in that** the step of fracture separation is effected by means of the fracture separation module according to any of claims 1 to 9.

12. Method for fracture separation of a workpiece according to claim 11, further comprising the following steps:
clamping the workpiece;
scoring the surface of the region or regions to be separated by fracturing;
in a certain region or regions, fracture separation of the workpiece; and
releasing and/or reclamping the workpiece.

13. Method according to claim 12, **characterised in that** steps of scoring and fracture separation are effected in one chucking process.

14. Method for fracture separation of a workpiece according to any of claims 11 to 13, **characterised in that** the step of fracture separation comprises fixed clamping on one side of the workpiece and movable clamping on another side of the workpiece.

15. Method for fracture separation of a workpiece according to any of claims 11 to 14, further comprising pressing the fracture separated regions against each other, preferably after cleaning the fracture separated surfaces, and further preferably further comprising fine machining of the surface of the fracture separated component, preferably in the same chucking process.

## Revendications

1. Module de séparation par rupture pour une machine-outil, **caractérisé en ce que** ledit module de séparation par rupture comprend :
(a) un axe d'entraînement (10) avec une partie de réception pour la mise en place du module dans une broche d'une machine-outil ;
(b) une pièce de rupture (20), de préférence de forme conique, pour la séparation par rupture d'une pièce à usiner ;
(c) une unité de conversion (30), qui est raccordée à l'axe d'entraînement (10) ainsi qu'à la pièce de rupture (20), et qui convertit un mouvement de rotation de l'axe d'entraînement (10) en un mouvement linéaire de la pièce de rupture (20) approprié pour la cassure de la pièce à usiner.

2. Module de séparation par rupture selon la revendication 1, **caractérisé en ce que** ledit module de séparation par rupture comprend en outre un carter (35), l'axe d'entraînement (10) étant rotatif par rapport au carter (35), et l'unité de conversion (30) comprenant préférentiellement une cale anti-couple (36), qui préserve le carter (35) de la rotation de l'axe d'entraînement (10).

3. Module de séparation par rupture selon l'une des revendications précédentes, **caractérisé en ce que** le mouvement de rotation de l'axe d'entraînement (10) est simultanément converti en un mouvement linéaire de la pièce de rupture (20) par support de la pièce de rupture (20).

4. Module de séparation par rupture selon la revendication 1 ou la revendication 2, **caractérisé en ce que** l'unité de conversion (30) comprend une unité d'entraînement pour la réception et l'accumulation de l'énergie fournie par la machine-outil via la broche, et un dispositif de verrouillage (60) pour la libération de l'énergie accumulée.

5. Module de séparation par rupture selon la revendication 4, **caractérisé en ce que** l'unité d'entraînement comprend en outre :
(c1) un piston (50) mobile dans la direction axiale de l'axe d'entraînement (10) et accouplé à la pièce de rupture (20) ;
(c2) un ou plusieurs ressorts (45), contre la force desquels le piston (50) peut être serré en étant déplacé dans la direction axiale de l'axe d'entraînement (10) ; et
(c3) un écrou (40) monté sur l'axe d'entraînement (10), au moins une partie de l'écrou (40) étant raccordée à au moins une partie du piston (50) pendant le serrage, de telle sorte que l'écrou (40) se déplaçant le long de l'axe d'entraînement (10) serre le piston (50) contre la force d'un ou de plusieurs ressorts (45).

6. Module de séparation par rupture selon la revendication 5, **caractérisé en ce que** le dispositif de verrouillage (60) libère le piston (50) serré, l'énergie potentielle accumulée dans les ressorts (45) étant convertie en énergie cinétique du piston (50), et le dispositif de verrouillage (60) étant préférentiellement commandé par un signal hydraulique, électromagnétique ou mécanique extérieur.

7. Module de séparation par rupture selon la revendication 5 ou la revendication 6, **caractérisé en ce que** plusieurs ressorts (45) sont disposés symétriquement autour de l'axe d'entraînement (10) en direction radiale et en direction périphérique, lesdits ressorts (45) présentant préférentiellement une force nominale de 7250 N environ, une longueur de 127 mm environ et une course de travail de 35 mm environ.

8. Module de séparation par rupture selon l'une des revendications 5 à 7, **caractérisé en ce que** le ou les ressorts (45) sont soit des ressorts hydrauliques, soit des ressorts mécaniques, soit des ressorts magnétiques.

9. Module de séparation par rupture selon l'une des revendications précédentes, **caractérisé en ce que** celui-ci est à mettre en place par une interface standard dans une machine-outil, ladite interface standard étant une réception HSK suivant DIN 69 893 ou un cône rapide suivant DIN 69 871.

10. Machine-outil comportant un module de séparation par rupture selon l'une des revendications précédentes.

11. Procédé de séparation par rupture d'une pièce à usiner, **caractérisé en ce que** l'étape de séparation par rupture est exécutée au moyen du module de séparation par rupture selon l'une des revendications 1 à 9.

12. Procédé de séparation par rupture d'une pièce à usiner selon la revendication il, comprenant en outre les étapes suivantes :
serrage de la pièce ;
entaillage de la surface de la zone ou des zones à séparer par rupture ;
séparation par rupture locale de la pièce ; et
desserrage et/ou resserrage de la pièce.

13. Procédé selon la revendication 12, **caractérisé en ce que** les étapes d'entaillage et de séparation par rupture sont exécutées pour un seul serrage.

14. Procédé de séparation par rupture d'une pièce à usiner selon l'une des revendications 11 à 13, **caractérisé en ce que** l'étape de séparation par rupture comprend un serrage fixe sur un côté et un serrage mobile sur un autre côté de la pièce.

15. Procédé de séparation par rupture d'une pièce à usiner selon l'une des revendications 11 à 14, comprenant en outre le serrage l'une contre l'autre des zones séparées par rupture, préférentiellement après nettoyage des surfaces séparées par rupture, et comprenant en outre préférentiellement l'usinage de précision de la surface du composant séparé par rupture, préférentiellement pendant le même serrage.
